# EUROPEAN PATENT SPECIFICATION

(11) **EP 0 380 436 B1**
(45) Date of publication and mention of the grant of the patent: **27.07.1994**
(21) Application number: 90610006.0
(22) Date of filing: 17.01.1990
(51) Int. Cl.: G01N 29/06

(54) **Method of visualising reflection characteristics in ultrasonic examinations**
Methode zur Anzeige von Reflexionseigenschaften bei Ultraschalluntersuchungen
Procédé pour visualiser les caractéristiques de la réflexion dans des examens ultrasonores

(30) Priority: 24.01.1989 US 300934
(43) Date of publication of application: 01.08.1990
(73) Proprietor: AKADEMIET FOR DE TEKNISKE VIDENSKABER, SVEJSECENTRALEN, DK-2605 Broendby (DK)
(72) Inventor: Lund, Svend Aage, DK-3460 Birkerod (DK); Nielsen, Bent Erling, DK-2800 Lyngby (DK)
(74) Representative: Simonsen, Christian Rosendal

(56) References cited:
- WO-A-87/07026
- US-A- 3 792 613
- US-A- 3 962 909
- US-A- 3 996 792
- J.KRAUTKRÄMER, H.KRAUTKRÄMER: "Werkstoffprüfung mit Ultraschall", 4th edition, Springer Verlag, Berlin, DE, 1980; pages 252-263

## Description

This invention relates to the analysis and evaluation of the results of ultrasonic examinations of solid objects by the pulse-echo method. The correct location, interpretation and sizing of internal flaws in materials and welded joints are matters of the greatest importance for the safety and fitness for purpose of important structures and installations.

A comprehensive disclosure of the state of the art relating to ultrasonic examination, including examination by the pulse-echo method is given in J. Krautkrämer and H. Krautkrämer "Ultrasonic Testing of Materials" Third revised Edition, Berlin, Heidelberg, New York 1983.

In the ultrasonic examination art, great efforts have been made to develop improved systems for the location and sizing of flaws in the materials and welded joints, in particular systems producing easily readable images of internal flaws. In many systems this has been made possible through the use of digital computing means including electronic matrix memories for the storage of echo data which may then be analysed, displayed on video monitors as grey scale or colour images, and permanently recorded by magnetic recording means or permanent prints.

In international patent application WO87/07026, and US-A-3962909 systems and methods of ultrasonic examination are disclosed providing sectional and projection views showing flaw images of greatly improved precision and sharpness of definition.

According to said prior art methods at least one ultrasonic probe is moved over the surface of the object examined, transmitting, at predetermined intervals of time, at least one short pulse of ultrasonic energy into the object. Signals containing information on the points of incidence of the sound beam, on the directions of the central axis of the sound beam, on the amplitudes of echo pulses from inhomogeneities, and on the corresponding path lengths of the sound beam, are measured, digitalised, stored and used to create video sectional projection views showing clear and sharp images of inhomogeneities inside the object. Such images may then be permanently recorded and printed in grey scale and colours for display, analysis and evaluation at any later time. The systems according to the above-mentioned reference have in practical examinations led to a drastic increase in the quality and precision of sectional and projection images, permitting a correct and precise location and evaluation of all inhomogeneities in three dimensions.

One problem has, however, remained to be solved. When a sound pulse is transmitted into the material and reflected from an inhomogeneity, the sound may travel along several different paths and undergo mode conversion on its way to and from the inhomogeneity. This fact leads to the formation of multiple images of one and the same inhomogeneity, and to 'ghost images' due to reflections from other inhomogeneities. It is then a cumbersome and time consuming task to keep track of and evalutate or eliminate such echoes, before a final decision can be made on the correct interpretation of the results of the examination.

The method according to the present invention has been evolved with the object of overcoming the disadvantages of the prior art by providing a new and satisfactory method of interpretation and evaluation of the results of ultrasonic examinations which have produced complex and overlapping patterns of flaw images.

According to the present invention a method of visualising reflection characteristics of reflecting inhomogeneities in an otherwise homogeneous object by pulse-echo ultrasonic examination, comprising the steps of moving at least one ultrasonic probe over a surface of the object, transmitting at predetermined intervals of time a sound beam containing at least one short pulse of ultrasonic energy into the object and receiving echo pulses from internal inhomogeneities, generating signals containing information on the corresponding, successive positions of the points of incidence and directions of the central axis of said sound beam, and, on receipt of an echo pulse, information on the amplitude of said echo pulse, and on the length of the sound path from said point of incidence to the reflecting point causing the echo pulse, and using said signals to display a B-scan display video flaw image of a sectional plane through the object, containing a selected image pixel representing said location of an inhomogeneity in the object, whereby representations of the echo amplitudes from a selected location are visualised as line segments having a length corresponding to the amplitude of said echo and originating at said image pixel and drawn in the direction of the projection of the incoming ultrasonic pulses at said location on said sectional plane, is characterized in that said information containing signals are generated as digital signals which are carried to and stored in memory means, that following generation of said video flaw image at least one possible sound path having a selected sound path length and including said image pixel and a further reflection in addition to the reflection at the inhomogeneity represented by said image pixel is examined for a certain position of said probe on said surface by carrying out a search through said memory means for an echo amplitude value for said selected sound path length and, upon finding of an echo a line segment is displayed superimposed on said video flaw image and/or in at least one second separate echo amplitude image in which the selected image pixel is positioned at the centre of the image.

By this method it has become possible to create clearly visible images of all the various echo amplitudes originating at a selected location, thereby greatly facilitating the task of interpretation and making use of all significant echoes, and eliminating echoes representing false reflections.

By displaying the line segment superimposed on the video flaw image all useful echoes which have been stored during the examination may be clearly indicated, originating from the point in the image where an inhomogeneity has been located, making it easy to see, understand and evaluate echoes which are important to the correct interpretation of the image of the inhomogeneity under consideration.

In the case where the line segment is displayed in a second separate echo amplitude image in which the selected image pixel is positioned in the centre the visualising of the flaw echoes is performed separately in one or more echo amplitude images which may be permanently recorded and/or printed out for further study, while the corresponding flaw images are superimposed on the original video sectional image.

Thereby, it becomes possible to exemplify the application of the invention in specific characteristic situations, and 12 such typical situations, covering objects having two plane and parallel surfaces, have been described in more detail. For someone well versed in the art of ultrasonic examinations, it will be easy to extend these descriptions to cover also the use of double probes, tandem probes, or multiarray probes, as well as the examination of T-joints, clad steels, pipe connections and even more complex situations, where the invention will equaly facilitate the interpretation and evaluation of the results.

Other objects and advantages of the invention will be readily apparent from the following description taken in conjunction with the accompanying drawings.
Figure 1 is a schematic presentation partly as an isometric view, and partly as a block diagram, of a prior art ultrasonic examination system, constituting the background of the present invention;
Figure 2 is a schematic presentation of the production of a video sectional image (B-scan presentation) by means of the prior art system of Figure 1;
Figure 3 is a schematic presentation of the video sectional image obtained in Figure 2, showing echo amplitude line segments obtained by the method according to the invention partly superimposed on the sectional image itself, and partly as separated echo amplitudes image;
Figure 4 is a schematic presentation of the addition to Figure 3 of another sectional image produced-by echo pulses reflected from a back wall surface of the object;
Figure 5 is a schematic presentation of the production of an image of a directly reflecting inhomogeneity;
Figures 6 to 9 are similar schematic presentations of 4 possible indirect reflections of the inhomogeneity shown in Figure 5;
Figures 10 to 15 are similar schematic presentations of possible reflections when using a creep wave angle probe; and
Figure 16 is a schematic presentation of a 'ghost reflection' from another inhomogeneity situated in the same sectional plane.

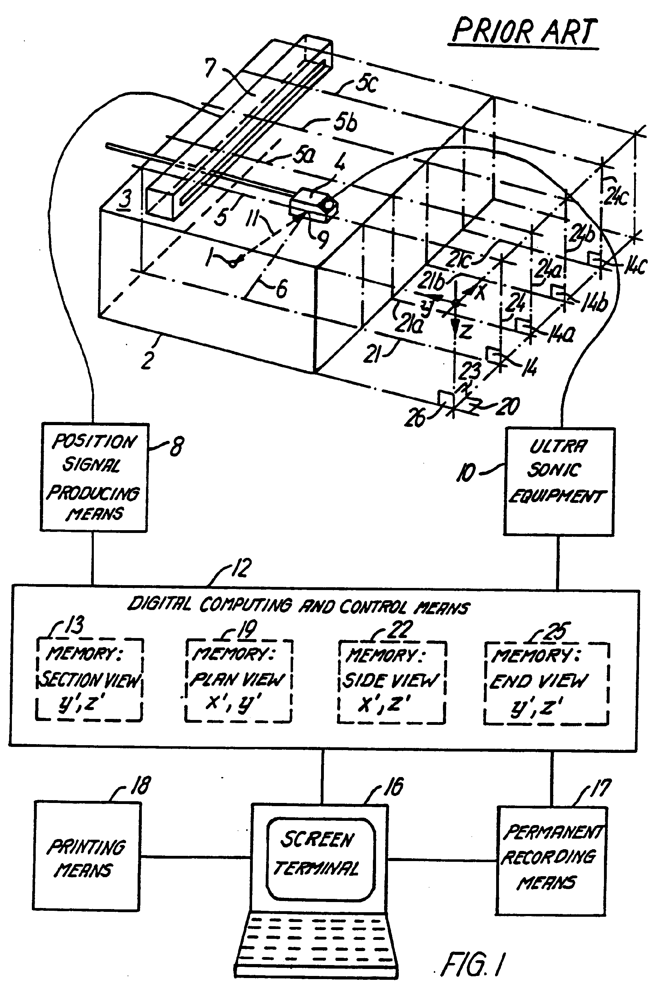

Figure 1 shows schematically a prior art ultrasonic system and method as disclosed in the abovementioned international application WO/87/07026 for producing and recording images of inhomogeneities 1 in an object 2 having a plane surface 3. An ultrasonic probe 4 is moved along a scanning path 5, transmitting short pulses of ultrasonic energy into the object in a sound beam having a central axis 6. Position signal producing means 7, 8 is adapted to transmit digital signals containing information on the positions of successive points of incidence 9 and directions of the axis 6 in a system of co-ordinates (x, y, z) in fixed relation to the object. On receipt of an echo pulse, an ultrasonic equipment 10 produces digital echo signals containing information on the amplitude of the echo pulse, and on the length of the sound path 11 from the point of incidence 9 to the reflecting point 1.

Corresponding position and echo pulse signals are carried to digital computing and control means 12 including one or more electronic matrix memories 13, 19, 22, 25 for data produced by the examination. A video screen terminal 16 controls the scanning movement of the ultrasonic probe and the functioning of the ultrasonic equipment and the digital computing and control means 12, and displays images derived from data stored in the matrix memories 13, 19, 22, 25. Recording means 17 is provided for producing permanent, electronically readable records of the data stored in the matrix memories and of images displayed on the screen terminal 16. Printing means 18 is provided for producing permanent prints of images displayed on the screen terminal.

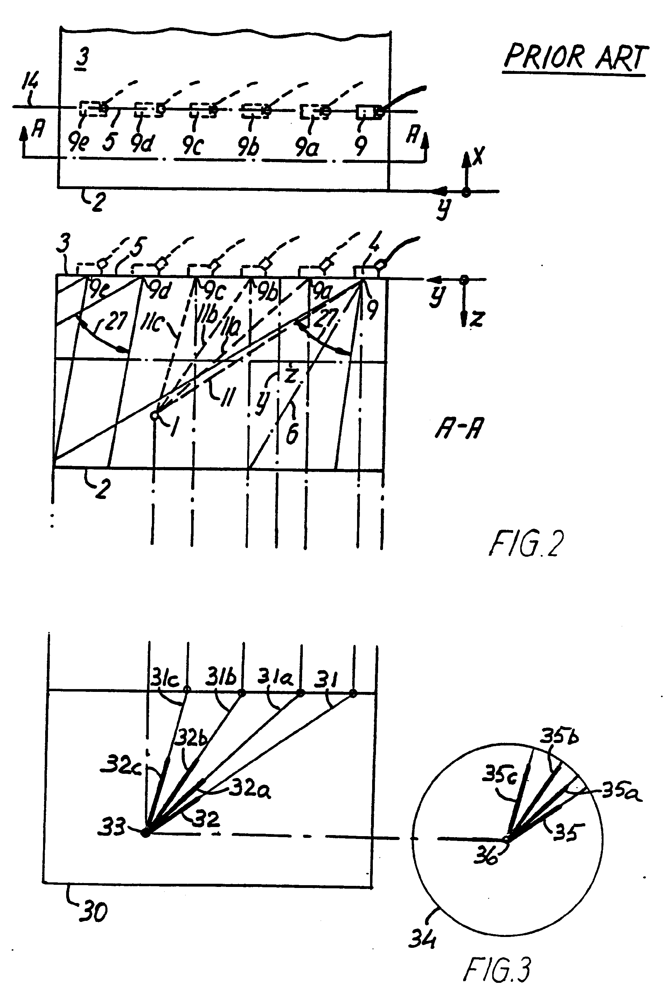

Figure 2 further illustrates schematically the opration of the prior art examination system when producing an image (B-scan display) of a sectional plane 14 through the object 2. The probe 4 is moved over the surface of the object to successive positions 9, 9a, 9b, ...9e. For each position, data representing echo pulse amplitudes, if any, are stored and used to display a normal complete sectional image on the video screen terminal 16.

It should be noted that the plane surface 3 is only shown as an example. In principle, the surface may have any shape, e.g. cylindrical or spherical, if only the shape of the surface is geometrically well defined in relation to the co-ordinates (X, y, z), and the digital computing and control means have been programmed accordingly.

The inhomogeneity 1 present in the object is shown at 33 in the sectional image 30 in Figure 3. Figure 3 further shows the superimposed images of line segments 32, 32a, 32b, 32c, indicating the echo amplitude values obtained in the corresponding positions 9, 9a, 9b, 9c of the ultrasonic probe, and the same amplitude values 35, 35a, 35b, 35c from a selected image pixel 36, are further shown in a separate sectional image 34. The line segments may be shown as heavy lines in a separate colour, while the sound paths may be indicated by the thin lines 31, 31a, 31b, 31c.

Each time an image pixel is selected for study, a search is started through the complete storage of echo amplitude values. For each distance 11, 11a, 11b, 11c a search is carried out among the stored values, and if an echo is found at the distance searached for, it is displayed as a line segment in the sectional image 30 and/or 34, and the corresponding flaw image 33 is shown superimposed on the sectional image 30.

It is clearly seen, how the amplitude line segments can be of great help in evaluating the results of the examination. Each type of inhomogeneity displays an individual pattern of echo amplitudes, e.g. plane defects at right angles to the defect plane, while inclusions have a tendency to reflect uniformly in all directions.

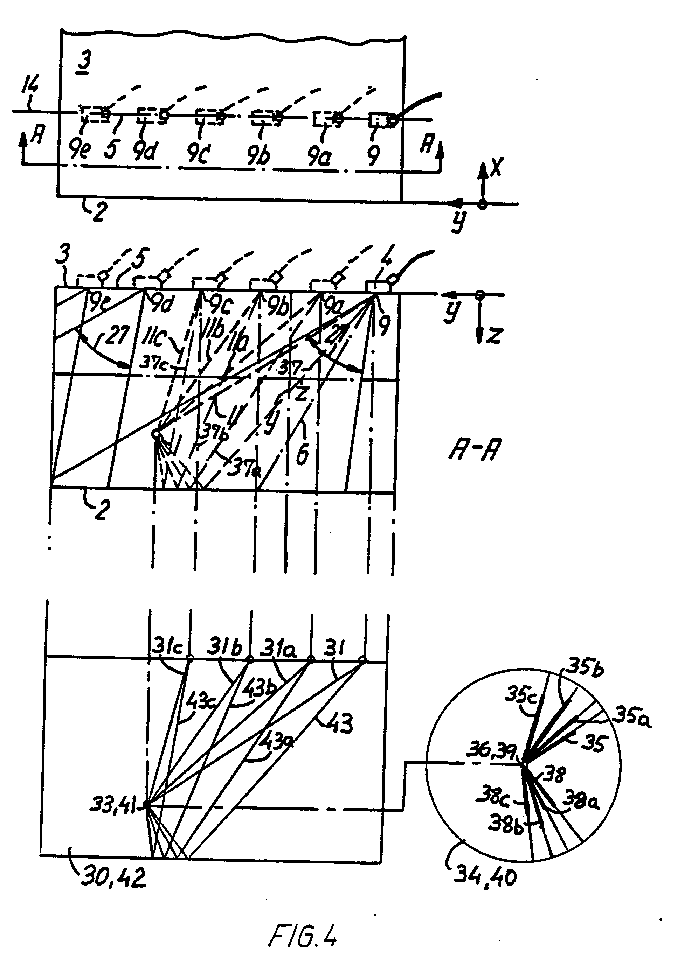

Figure 4 shows schematically a search for reflected echoes from the inhomogeneity 1. For each distance 37, 37a, 37b, 37c a search is carried out among the stored echo values, and if an echo is found at the distance searched for, it is displayed as a line segment 38, 38a, 38b, 38c from the selected image pixel 39 in the sectional image 40, and the corresponding flaw image 41 is shown superimposed on the sectional image 42. The thin lines 31, 31a, 31b, 31c and 43, 43a, 43b, 43c indicating the sound paths searched for may be retained for information during the phase of analysing the results of the examination.

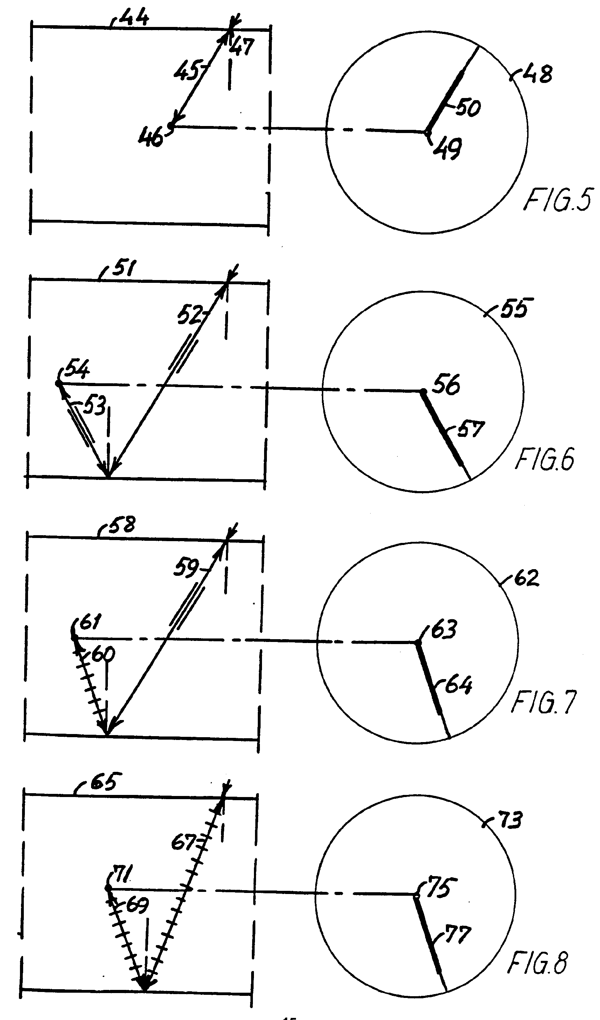

Figure 5 shows schematically a sectional view 44 of an ultrasonic pulse 45 transmitted from a first ultrasonic angle probe and reflected from an inhomogenei ty 46 directly back to the point of incidence 47 of the ultrasonic beam from said ultrasonic probe. This is the first useful echo normally looked for, and shown in the separate sectional view 48 from the corresponding image pixel 49 as the line segment 50.

Figure 6 shows a sectional view 51 of an ultrasonic pulse 52 transmitted from a first ultrasonic angle probe as longitudinal waves which are first reflected as longitudinal waves 53 from the back wall of the object. Part of the waves are reflected from an inhomogeneity 54 back the same way to the ultrasonic probe. In the separate sectional view 55 from the corresponding image pixel 56 this reflected echo is shown as the line segment 57, and the flaw image 51 may then be superimposed on the image 44.

Figure 7 shows a sectional view 57 of an ultrasonic pulse 59 transmitted from a first ultrasonic angle probe as longitudinal waves which are first reflected as transversal waves 60 from the back wall of the object. Part of the waves are reflected from a inhomogeneity 61 back the same way to the ultrasonic probe. In the separate section view 62 from the corresponding image pixel 63, this reflected echo is shown as the line segment 64, and the flaw image 58 may then be superimposed on the image 44.

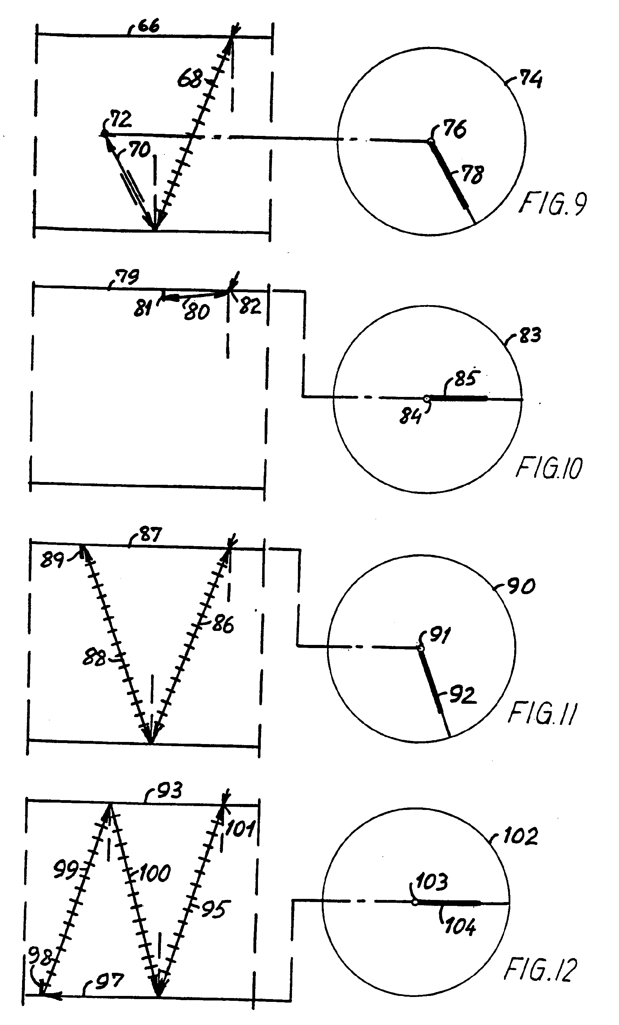

Figures 8 and 9 show sectional views 65, 66 of ultrasonic pulses 67, 68, transmitted from first ultrasonic angle probes as transversal waves which are reflected as transversal waves 69 or longitudinal waves 70 from the back wall of the object. Part of the waves are reflected from inhomogeneities 71, 72 back the same way to the ultrasonic probe. In separate views 73, 74 from corresponding image pixels 75, 76, the reflected echoes are shown as line segments 77, 78, and the flaw images 65, 66 may then be superimposed on the image 44.

It is quite apparent, how the echo images may be a great help in the interpretation of the results of the examination, and equally apparent, how the flaw image 44 may be improved by adding the important information in the flaw images 54, 61, 71 and 72 which is disregarded in the prior art.

Figure 10 shows a sectional view 79 of an ultrasonic pulse 80 transmitted from a first ultrasonic creep wave angle probe as creep waves reflected directly from a flaw 81 at or immediately below the surface of the object back to the point of incidence 82 of the sound beam from said ultrasonic probe. This is again a useful echo that is first looked for, and shown in the separate sectional view 83 from the corresponding image pixel 84 as a line segment 85.

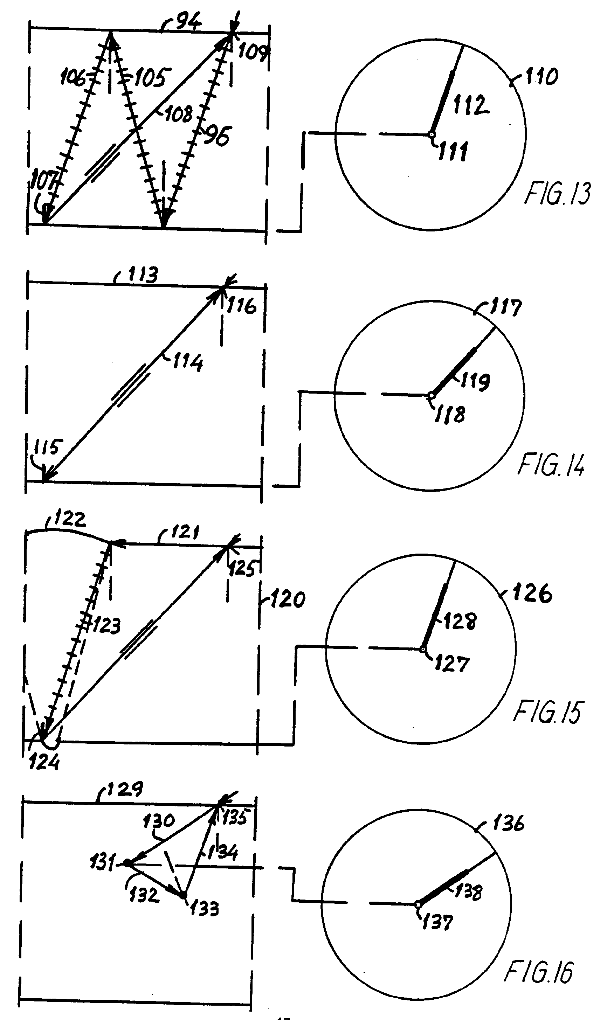

An ultrasonic creep wave angle probe also transmits secondary transversal waves 86 as shown in Figure 11 which shows a sectional view 87 of an ultrasonic pulse of such transversal waves 88 from the back wall of the object. Part of the waves are reflected from the flaw 89 at or immediately below the surface of the object back to the ultrasonic probe. In the separate sectional view 90 from the corresponding image pixel 91 this reflected echo is shown as the line segment 92, and the flaw image 87 may then be superimposed on the image 79.

Figures 12 and 13 show sectional views 93 and 94, showing transversal waves 95 and 96, reflected in two different ways. In Figure 12 the transversal wave 95 is changed into a creep wave 97. At the flaw 98 in the back surface, the wave is changed into a transversal wave 99 which is reflected at the front surface as a transversal wave 100 which is mirrored back to the point of incidence 101 of the sound beam. In the separate sectional view 102 from the corresponding image pixel 103, this reflected wave is shown as the line segment 104.

In Figure 13 the transversal wave 96 is reflected twice as transversal waves 105 and 106 which at the flaw 107 are changed into a longitudinal wave 108 back to the point of incidence 109 of the sound beam. In the separate sectional view 100 from the corresponding image pixel 111, this reflected echo is shown as the line segment 112, and the flaw image 94 may then be superimposed on the flaw image 93.

An ultrasonic creep wave angle probe also transmits secondary longitudinal waves as shown in Figure 14 which shows a sectional view 113 of an ultrasonic pulse of such longitudinal waves 114 which are reflected back from the flaw 115 directly to the point of incidence 116 of the sound beam. In the separate sectional view 117 from the corresponding image pixel 118 this reflected echo is shown as the line segment 119, and the flaw image may again be superimposed on the flaw image 93.

Figure 15 shows in the sectional view 120, how creep waves 121 from a creep wave angle probe may be changed at the edge of a butt weld 122 into transversal waves 123. These waves are then reflected from a flaw 124 at or immediately below the back surface of the object back to the point of incidence 125 of the sound beam. In a separate sectional view 126 from the corresponding image pixel 127 the reflected waves are identified by the line segment 128.

Finally Figure 16 shows as an example in a sectional view 129, how an ultrasonic wave 130 from an ultrasonic angle probe may be reflected a first time from an inhomogeneity 131 as an ultrasonic wave 132, and then be reflected a second time from another inhomogeneity 133 as an ultrasonic wave 134 back to the point of incidence 135 of the sound beam. This false reflection is shown in the separate sectional view 136 from the corresponding image pixel 137 as the line segment 138. In this way it is possible to identify and disregard false, reflected echoes and their corresponding 'ghost images' in the sectional view 129.

It is clearly demonstrated in the examples above, how the amplitude line segments can be a very powerful tool, both on line during the examination, and in later post processing in the identification of reflected echoes and the disregarding of false echoes. At the same time the superimposing of the flaw images which may undergo the same methods of image enhancement and filtering as the direct image, may add important information which is disregarded in the prior art.

It will be understood that several modifications and variations of the method disclosed may be applied without departing from the scope of the novel concepts of the present invention.

## Claims

1. A method of visualising reflection characteristics of reflecting inhomogeneities in an otherwise homogeneous object (2) by pulse-echo ultrasonic examination, comprising the steps of moving at least one ultrasonic probe (4) over a surface (3) of the object (2), transmitting at predetermined intervals of time a sound beam containing at least one short pulse of ultrasonic energy into the object (2) and receiving echo pulses from internal inhomogeneities (1), generating signals containing information on the corresponding, successive positions (9) of the points of incidence and directions (11) of the central axis of said sound beam, and, on receipt of an echo pulse, information on the amplitude of said echo pulse, and on the length of the sound path from said point of incidence to the reflecting point causing the echo pulse, and using said signals to display a B-scan display video flaw image (30) of a sectional plane through the object, containing a selected image pixel (36, 39) representing said location of an inhomogeneity in the object, whereby representations of the echo amplitudes from a selected location are visualised as line segments having a length corresponding to the amplitude of said echo and originating at said image pixel and drawn in the direction of the projection of the incoming ultrasonic pulses at said location on said sectional plane, **characterized** in that said information containing signals are generated as digital signals which are carried to and stored in memory means (13, 19, 22, 25), that following generation of said video flaw image (30, 40) at least one possible sound path having a selected sound path length and including said image pixel and a further reflection in addition to the reflection at the inhomogeneity represented by said image pixel is examined for a certain position of said probe (4) on said surface (3) by carrying out a search through said memory means for an echo amplitude value for said selected sound path length and, upon finding of an echo a line segment is displayed superimposed on said video flaw image (30) and/or in at least one second separate echo amplitude image (34) in which the selected image pixel (33) is positioned at the centre (36) of the image.

2. A method according to claim 1, **characterized** in that a line segment is displayed corresponding to a pulse echo reflected back directly from said location to the point of incidence (47) of the sound beam from said ultrasonic probe (4).

3. A method according to claim 1, **characterized** in that the pulse transmitted into the object from the ultrasonic probe (4) consists of longitudinal waves (52) which are first reflected as longitudinal waves (53) towards said location from a point of reflection at a back surface of the object, opposite the surface of incidence and that a line segment is displayed corresponding to a wave reflected back the same way to said point of incidence from said location (54), and, if the amplitude of said reflected wave exceeds a predetermined level, said separate echo amplitude image (55) thus produced is displayed superimposed on said video flaw image.

4. Method according to claim 3, **characterized** in that the pulse transmitted into the object from the ultrasonic probe (4) consists of longitudinal waves (59) which are first reflected as transversal waves (60) towards said location from a point of reflection at a back surface of the object opposite the surface of incidence and that a line segment is displayed corresponding to a wave reflected back the same way to said point of incidence from said location (61), and, if the amplitude of said reflected wave exceeds a predetermined level, said separate echo amplitude image (62) thus produced is displayed superimposed on said video flaw image.

5. A method according to claim 1, **characterized** in that the pulse transmitted into the object from the ultrasonic probe consists of transversal waves (67) which are first reflected as transversal waves (69) towards said location from a point of reflection at a back surface of the object opposite the surface of incidence and that a line segment is displayed corresponding to a wave reflected back the same way to said point of incidence from said location (71), and, if the amplitude of said reflected wave exceeds a predetermined level said separate echo amplitude image (73) thus produced is displayed superimposed on said video flaw image.

6. A method according to claim 1, **characterized** in that the pulse transmitted into the object from the ultrasonic probe consists of transversal waves (68) which are first reflected as longitudinal waves (70) towards said location from a point of reflection at a back surface of the object, opposite the surface of incidence and that a line segment is displayed corresponding to a wave reflected back the same way to said point of incidence from said location (72), and, if the amplitude of said the reflected wave exceeds a predetermined level, said separate echo amplitude image (74) thus produced is displayed superimposed on said video sectional flaw image.

7. A method according to claim 1, **characterized** in that an ultrasonic pulse transmitted into the object from an ultrasonic creep wave angle probe is reflected back as a creep wave (80) directly from a location at or immediately below the front surface of the object to the same ultrasonic probe.

8. A method according to claim 1, **characterized** in that a pulse transmitted into the object from an ultrasonic creep wave angle probe consists of transversal waves (86) which are first reflected as transversal waves (88) towards said location from a point of reflection at a back surface of the object opposite the surface of incidence and that a line segment is displayed corresponding to a wave reflected back the same way to said point of incidence from a flaw (89) at or immediately below the front surface of the object, and, if the amplitude of said reflected wave exceeds a predetermined level, separate echo amplitude (90) thus produced is displayed superimposed on said video flaw image.

9. A method according to claim 1, **characterized** in that a pulse transmitted into the object from an ultrasonic creep wave angle probe as transversal waves (95) is changed at a point of reflection at a back wall surface into creep waves (97) which are reflected from a flaw (98) at or immediately below said back wall surface as transversal waves (99) which are reflected a second time from the front surface of the object and reflected a third time from the back surface as transversal waves which are finally reflected back to said point of incidence (101) and, if the amplitude of the reflected waves exceeds a predetermined level, said separate echo amplitude image (102) thus produced is displayed superimposed on said video flaw image.

10. A method according to claim 1, **characterized** in that a pulse transmitted into the object from an ultrasonic creep wave angle probe as transversal waves (96) is first reflected as transversal waves (105) back to the front surface, then reflected as transversal waves (106) to the back surface, where a flaw (107) at or immediately below said surface reflects the pulse as longitudinal waves (108) which are finally received back at the point of incidence (109) of said ultrasonic probe, and, if the amplitude of the reflected waves exceeds a predetermined level, said separate echo amplitude image (110) thus produced is displayed superimposed on said video flaw image.

11. A method according to claim 1, **characterized** in that a pulse transmitted into the object from an ultrasonic creep wave angle probe as longitudinal waves (114) is reflected from a flaw (115) at or immediatelyl below a back surface as a longitudinal wave (114) directly back to said point of incidence (116) and, if the amplitude of the reflected wave exceeds a predetermined level said separate echo amplitude image (117) thus produced is displayed superimposed on said video flaw image.

12. A method according to claim 3, **characterized** in that a pulse transmitted from an ultrasonic creep wave angle probe as creep waves (121) along the front surface of the object is changed at the edge of a butt weld (122) into transversal waves (123) which are reflected from a flaw (124) at or immediately below a back surface as longitudinal waves which are finally received back at said point of incidence (125) and, if the amplitude of the reflected waves exceeds a predetermined level, said separate echo amplitude image (126) thus produced is displayed superimposed on said flaw image.

13. A method according to claim 1, **characterized** in that an ultrasonic pulse transmitted into the object by an ultrasonic probe is first reflected by a first internal inhomogeneity (131) then reflected a second time from a second internal inhomogeneity (133), and finally received back at the point of incidence (135) of said ultrasonic angle probe.

## Patentansprüche

1. Verfahren zur Darstellung von Reflexionscharakteristiken von reflektierenden Inhomogenitäten in einem sonst homogenen Gegenstand (2) mittels einer Impuls-Echo-Ultraschalluntersuchung, mit den Schritten des Bewegens zumindest eines Ultraschall-Prüfkopfes (4) über eine Oberfläche (3) des Gegenstandes (2), des Einstrahlens eines zumindest einen kurzen Impuls Ultraschall-Energie enthaltenden Schallstrahles in vorbestimmten Zeitintervallen in den Gegenstand (2) und des Empfangens von Echo-Impulsen von inneren Inhomogenitäten (1), des Erzeugens von Signalen, die Informationen über die entsprechenden aufeinanderfolgenden Positionen (9) der Einfallspunkte und über die Richtungen (11) der Mittelachse des Schallstrahles, und, bei Empfang eines Echo-Impulses, Informationen über die Amplitude des Echo-Impulses und über die Länge des Schallweges vom Einfallspunkt bis zum reflektierenden Punkt, der den Echo-Impuls auslöst, enthalten, und des Verwendens dieser Signale zur Anzeige eines Video-Defekt-Bildes (30) in einer B-Abtast-Darstellung einer Schnittebene durch den Gegenstand, das einen ausgewählten Bildpunkt (Pixel) (36, 39) enthält, der den Ort einer Inhomogenität in dem Gegenstand repräsentiert, wobei die Echo-Amplituden eines ausgewählten Ortes als Linienabschnitte dargestellt werden, die eine der Amplitude des Echos entsprechende Länge aufweisen, von dem Bildpunkt ausgehen, und in die Richtung der Projektion des an diesem Ort ankommenden Ultraschall-Impulses auf die Schnittfläche weisen,
**dadurch gekennzeichnet,**
daß die die Informationen enthaltenden Signale als Digitalsignale erzeugt werden,
die Speichervorrichtungen (13, 19, 22, 25) zugeführt und in ihnen gespeichert werden, daß, nach der Erzeugung des Video-Defekt-Bildes (30, 40), zumindest ein möglicher Schallweg, der eine ausgewählte Schallweglänge aufweist und der den Bildpunkt und eine weitere Reflexion zusätzlich zu der Reflexion bei der durch den Bildpunkt repräsentierten Inhomogenität umfaßt, für eine bestimmte Position des Prüfkopfes (4) auf der Oberfläche (3) untersucht wird, in dem eine Suche indem Speichervorrichtungen nach einem Echo-Amplitudenwert für die ausgewählte Schallweglänge durchgeführt wird,
wobei beim Auffinden eines Echos, ein Linienabschnitt dem Video-Defekt-Bild (30) überlagert und/oder in zumindest einem zweiten getrennten Echo-Amplituden-Bild (34), in dem der ausgewählte Bildpunkt (33) sich im Zentrum (36) des Bildes befindet, dargestellt wird.

2. Verfahren gemäß Anspruch 1,
**dadurch gekennzeichnet,**
daß ein Linienabschnitt dargestellt wird, der einem Impuls-Echo entspricht, das von dem Ort zum Einfallspunkt (47) des Schallstrahles des Ultraschall-Prüfkopfes (4) zurückreflektiert worden ist.

3. Verfahren gemäß Anspruch 1,
**dadurch gekennzeichnet,**
daß der vom Ultraschall-Prüfkopf (4) in den Gegenstand eingestrahlte Impuls aus longitudinalen Wellen (52) besteht, die zuerst als longitudinale Wellen (53) von einem Reflexionspunkt an einer hinteren Oberfläche des Gegenstandes, die der Einfallsoberfläche gegenüberliegt, in Richtung des Ortes reflektiert werden, und daß ein Linienabschnitt dargestellt wird, der einer von dem Ort (54) auf dem gleichen Weg zum Einfallspunkt zurückreflektierten Welle entspricht, wobei, wenn die Amplitude der reflektierten Welle einen vorbestimmten Grenzwert überschreitet, das somit hergestellte getrennte Echo-Amplituden-Bild (55) dem Video-Defekt-Bild überlagert dargestellt wird.

4. Verfahren gemäß Anspruch 3,
**dadurch gekennzeichnet,**
daß der von dem Ultraschall-Prüfkopf (4) in den Gegenstand eingestrahlte Impuls aus longitudinalen Wellen (59) besteht, die zuerst als transversale Wellen (60) von einem Reflexionspunkt an einer hinteren Oberfläche des Gegenstandes, die der Einfallsoberfläche gegenüberliegt, in Richtung des Ortes reflektiert werden, und daß ein Linienabschnitt dargestellt wird, der einer von dem Ort (61) auf dem gleichen Weg zum Einfallspunkt zurückreflektierten Welle entspricht, wobei, wenn die Amplitude der reflektierten Welle einen vorbestimmten Grenzwert überschreitet, das somit hergestellte getrennte Echo-Amplituden-Bild (62) dem Video-Defekt-Bild überlagert dargestellt wird.

5. Verfahren gemäß Anspruch 1,
**dadurch gekennzeichnet,**
daß der von dem Ultraschall-Prüfkopf in den Gegenstand eingestrahlte Impuls aus transversalen Wellen (67) besteht, die zuerst als transversale Wellen (69) von einem Reflexionspunkt an einer hinteren Oberfläche des Gegenstandes, die der Einfallsoberfläche gegenüberliegt, in Richtung des Ortes reflektiert werden, und daß ein Linienabschnitt dargestellt wird, der einer von dem Ort (71) auf dem gleichen Weg zu dem Einfallspunkt zurückreflektierten Welle entspricht, wobei, wenn die Amplitude der reflektierten Welle einen vorbestimmten Grenzwert überschreitet, das somit hergestellte getrennte Echo-Amplituden-Bild (73) dem Video-Defekt-Bild überlagert dargestellt wird.

6. Verfahren gemäß Anspruch 1,
**dadurch gekennzeichnet,**
daß der vom Ultraschall-Prüfkopf in den Gegenstand eingestrahlte Impuls aus transversalen Wellen (68) besteht, die zuerst als longitudinale Wellen (70) von einem Reflexionspunkt an einer hinteren Oberfläche des Gegenstandes, die der Einfallsoberfläche gegenüberliegt, in Richtung des Ortes reflektiert werden, und daß ein Linienabschnitt dargestellt wird, der einer von dem Ort auf dem gleichen Weg zum Einfallspunkt zurückreflektierten Welle entspricht, wobei, wenn die Amplitude der reflektierten Welle einen bestimmten Grenzwert überschreitet, das somit hergestellte getrennte Echo-Amplituden-Bild (74) dem Video-Defekt-Schnittbild überlagert dargestellt wird.

7. Verfahren gemäß Anspruch 1,
**dadurch gekennzeichnet,**
daß ein von einem Ultraschall-Kriechwellenwinkel-Prüfkopf in den Gegenstand eingestrahlter Ultraschall-Impuls als Kriechwelle (creep wave) (80) direkt von einem Ort an oder unmittelbar unter der vorderen Oberfläche des Gegenstandes zum gleichen Ultraschall-Prüfkopf zurückreflektiert wird.

8. Verfahren gemäß Anspruch 1,
**dadurch gekennzeichnet,**
daß ein von einem Ultraschall-Kriechwellenwinkel-Prüfkopf in den Gegenstand eingestrahlter Impuls aus transversalen Wellen (86) besteht, die zuerst als transversale Wellen (88) von einem Reflexionspunkt an einer hinteren Oberfläche des Gegenstandes, die der Einfallsoberfläche gegenüberliegt, in Richtung des Ortes reflektiert werden, und daß ein Linienabschnitt dargestellt wird, der einer von einem Defekt (89) an oder unmittelbar unter der vorderen Oberfläche des Gegenstandes den gleichen Weg zum Einfallspunkt zurückreflektierten Welle entspricht, wobei, wenn die Amplitude der reflektierten Welle einen vorbestimmten Grenzwert überschreitet, die somit hergestellte getrennte Echo-Amplitude (90) dem Video-Defekt-Bild überlagert dargestellt wird.

9. Verfahren gemäß Anspruch 1,
**dadurch gekennzeichnet,**
daß ein von einem Ultraschall-Kriechwellenwinkel-Prüfkopf als transversale Wellen (95) in den Gegenstand eingestrahlter Impuls an einem Reflexionspunkt an einer hinteren Oberfläche in Kriechwellen (97) umgewandelt wird, die von einem Defekt (98) an oder unmittelbar unter der hinteren Oberfläche als transversale Wellen (99) reflektiert werden, die ein zweites Mal von der vorderen Oberfläche des Gegenstandes reflektiert werden und ein drittes Mal von der hinteren Oberfläche als transversale Wellen reflektiert werden, die zuletzt zum Einfallspunkt (101) zurückreflektiert werden, wobei, wenn die Amplitude der reflektierten Wellen einen vorbestimmten Grenzwert überschreitet, das somit hergestellte getrennte Echo-Amplituden-Bild (102) dem Video-Defekt-Bild überlagert dargestellt wird.

10. Verfahren gemäß Anspruch 1,
**dadurch gekennzeichnet,**
daß ein von einem Ultraschall-Kriechwellenwinkel-Prüfkopf als transversale Wellen (96) in den Gegenstand eingestrahlter Impuls zuerst als transversale Wellen (105) zurück zur vorderen Oberfläche, dann als transversale Wellen (106) zur hinteren Oberfläche reflektiert wird, wo ein Defekt (107) an oder unmittelbar unter der Oberfläche den Impuls als longitudinale Wellen (108) reflektiert, die zuletzt am Einfallspunkt des Ultraschall-Prüfkopfes wieder empfangen werden, wobei, wenn die Amplitude der reflektierten Wellen einen vorbestimmten Grenzwert überschreitet, das somit hergestellte getrennte Echo-Amplituden-Bild (110) dem Video-Defekt-Bild überlagert dargestellt wird.

11. Verfahren gemäß Anspruch 1,
**dadurch gekennzeichnet,**
daß ein von einem Ultraschall-Kriechwellenwinkel-Prüfkopf als longitudinale Wellen (114) in den Gegenstand eingestrahlter Impuls von einem Defekt (115) an oder unmittelbar unter einer hinteren Oberfläche als longitudinale Welle (114) direkt zurück zum Einfallspunkt (116) zurückreflektiert wird, wobei, wenn die Amplitude der reflektierten Welle einen vorbestimmten Grenzwert überschreitet, das somit hergestellte getrennte Echo-Amplituden-Bild (117) dem Video-Defekt-Bild überlagert dargestellt wird.

12. Verfahren gemäß Anspruch 3,
**dadurch gekennzeichnet,**
daß ein von einem Ultraschall-Kriechwellenwinkel-Prüfkopf als Kriechwelle (121) entlang der vorderen Oberfläche des Gegenstandes eingestrahlter Impuls an der Kante einer Stumpfschweißnaht (122) in transversale Wellen (123) umgewandelt wird, die von einem Defekt (124) an oder unmittelbar unter einer hinteren Oberfläche als longitudinale Wellen reflektiert werden, die zuletzt am Einfallspunkt (125) wieder empfangen werden, wobei, wenn die Amplitude der reflektierten Wellen einen vorbestimmten Grenzwert überschreitet, das somit hergestellte getrennte Echo-Amplituden-Bild (126) dem Defekt-Bild überlagert dargestellt wird.

13. Verfahren gemäß Anspruch 1,
**dadurch gekennzeichnet,**
daß ein von einem Ultraschall-Prüfkopf in den Gegenstand eingestrahlter Ultraschall-Impuls zuerst an einer ersten inneren Inhomogenität (131) reflektiert wird, dann ein zweites Mal von einer zweiten inneren Inhomogenität (133) reflektiert wird, und zuletzt am Einfallspunkt (135) des Ultraschall-Winkel-Prüfkopfes wieder empfangen wird.

## Revendications

1. Procédé pour visualiser des caractéristiques de réflexion, qui sont le reflet d'hétérogénéités dans un objet par ailleurs homogène (2), au moyen d'un examen ultrasonore à échos d'impulsions comprenant les étapes consistant à déplacer au moins une sonde à ultrasons (4) au-dessus d'une surface (3) de l'objet (2), à transmettre, à des intervalles de temps prédéterminés, un faisceau acoustique contenant au moins une brève impulsion d'énergie ultrasonore dans l'objet (2) et à recevoir des impulsions d'échos à partir d'hétérogénéités internes (1), à produire des signaux contenant une information concernant les positions correpondantes successives (9) des points d'incidence et des directions (11) de l'axe central optique dudit faisceau acoustique et, lors de la réception d'une impulsion d'écho, une impulsion concernant l'amplitude de ladite impulsion d'écho et la longueur du trajet acoustique s'étendant dudit point d'incidence jusqu'au point de réflexion provoquant l'impulsion d'écho, et a utiliser lesdits signaux pour afficher une image vidéo de défaut (30), selon un affichage avec un balayage de type B, d'un plan de coupe de l'objet, contenant un pixel d'image sélectionné (36, 39) représentant ledit emplacement d'une hétérogénéité dans l'objet, des représentations des amplitudes d'échos provenant d'un emplacement sélectionné étant visualisés sous la forme de segments de droite possédant une longueur correspondant à l'amplitude dudit écho et partant dudit pixel d'image et tracée dans la direction de la projection des impulsions ultrasonores arrivante audit emplacement dans ledit plan de coupe, caractérisé en ce que lesdits signaux contenant les informations sont produites sous la forme de signaux numériques, qui sont transmis et mémorisés dans des moyens de mémoire (13, 19, 22, 25), qu'à la suite de la production de ladite image vidéo de défaut (30, 40), au moins un trajet acoustique possible possédant une longueur sélectionnée et contenant ledit pixel d'image et une autre réflexion en plus de la réflexion au niveau de l'hétérogénéité représentée par ledit pixel d'image sont examinés, pour une certaine position de ladite sonde (4) sur ladite surface (3), au moyen de l'exécution d'une recherche, dans lesdits moyens de mémoire, d'une valeur d'amplitude d'écho pour ladite longueur de trajet acoustique sélectionnée et, lors de la découverte d'un écho, un segment de droite est affiché en superposition sur ladite image vidéo de défaut (30) et/ou dans au moins une seconde image séparée d'amplitude d'écho (34), dans laquelle le pixel d'image sélectionné (33) est positionné au centre (36) de l'image.

2. Procédé selon la revendication 1, caractérisé en ce qu'un segment de droite est affiché conformément à un écho d'impulsion réfléchi directement depuis ledit emplacement en direction du point d'incidence (47) du faisceau acoustique délivré par la sonde à ultrasons (4).

3. Procédé selon la revendication 1, caractérisé en ce que l'impulsion envoyée dans l'objet à partir de la sonde à ultrasons (4) est constituée par des ondes longitudinales (52), qui sont tout d'abord réfléchies en tant qu'ondes longitudinales (53) en direction dudit emplacement à partir d'un point de réflexion situé sur une surface arrière de l'objet, à l'opposé de la surface d'incidence, et qu'un segment de droite est affiché conformément à une onde réfléchie sur le même trajet en direction dudit point d'incidence à partir dudit emplacement (54), et, si l'amplitude de ladite onde réfléchie dépasse un niveau prédéterminé, ladite image d'amplitude d'écho séparée (55) ainsi produite est affichée en superposition à ladite image vidéo de défaut.

4. Procédé selon la revendication 3, caractérisé en ce que l'impulsion envoyée dans l'objet à partir de la sonde à ultrasons (4) est constituée par des ondes longitudinales (59), qui sont tout d'abord réfléchies sous la forme d'ondes transversales (60) en direction dudit emplacement à partir d'un point de réflexion situé sur une surface arrière de l'objet, à l'opposé de la surface d'incidence, et qu'un segment de droite est affiché, conformément à une onde réfléchie sur le même trajet en direction dudit point d'incidence à partir dudit emplacement (61), et, si l'amplitude de ladite onde réfléchie dépasse un niveau prédéterminé, ladite image d'amplitude d'écho séparée (62) ainsi produite est affichée en superposition sur ladite image vidéo de défaut.

5. Procédé selon la revendication 1, caractérisé en ce que l'impulsion envoyée dans l'objet à partir de la sonde à ultrasons est constituée par des ondes transversales (67), qui sont tout d'abord réfléchies sous la forme d'ondes transversales (69) en direction dudit emplacement à partir d'un point de réflexion situé sur une surface arrière de l'objet, à l'opposé de la surface d'incidence, et qu'un segment de droite est affiché conformément à une onde réfléchie sur le même trajet en direction dudit point d'incidence à partir dudit emplacement (71), et, si l'amplitude de ladite onde réfléchie dépasse un niveau prédéterminé, ladite image d'amplitude d'écho séparée (73) ainsi produite est affichée en superposition sur ladite image vidéo de défaut.

6. Procédé selon la revendication 1, caractérisé en ce que l'impulsion transmise dans l'objet à partir de la sonde à ultrasons est constituée par des zones transversales (68), qui sont tout d'abord réfléchies en tant qu'ondes longitudinales (70) en direction dudit emplacement à partir d'un point de réflexion situé sur une surface arrière de l'objet, à l'opposé de la surface d'incidence, et qu'un segment de droite est affiché conformément à une onde réfléchie sur le même trajet en direction dudit point d'incidence à partir dudit emplacement (72), et, si l'amplitude de ladite onde réfléchie dépasse un niveau prédéterminé, ladite image d'amplitude d'écho séparée (74) ainsi produite est affichée en superposition sur ladite image vidéo de défaut en coupe.

7. Procédé selon la revendication 1, caractérisé en ce qu'une impulsion ultrasonore introduite dans l'objet à partir d'une sonde à ultrasons d'angle à ondes de rampage est réfléchie en tant qu'onde de rampage (80) juste à partir d'un emplacement situé sur ou directement au-dessous de la surface frontale de l'objet, en direction de la même sonde à ultrasons.

8. Procédé selon la revendication 1, caractérisé en ce qu'une impulsion envoyée dans l'objet à partir d'une sonde à ultrasons d'angle à ondes de rampage est constituée par des ondes transversales (86), qui sont tout d'abord réfléchies en tant qu'ondes transversales (88) en direction dudit emplacement à partir d'un point de réflexion situé sur une surface arrière de l'objet, à l'opposé de la surface d'incidence, et qu'un segment de droite est affiché, conformément à une onde réfléchie sur le même trajet en direction dudit point d'incidence à partir d'un défaut (89) situé sur ou juste au-dessous de la surface frontale de l'objet et, si l'amplitude de ladite onde réfléchie dépasse un niveau prédéterminé, une amplitude d'écho séparée (90) ainsi produite est affichée en superposition sur ladite image vidéo du défaut.

9. Procédé selon la revendication 1, caractérisé en ce qu'une impulsion envoyée dans l'objet à partir d'une sonde à ultrasons d'angle à ondes de rampage en tant qu'ondes transversales (95) est transformé, en un point de réflexion au niveau d'une surface de paroi arrière, en des ondes de rampage (97) qui sont réfléchies à partir d'un défaut (98) situé sur ou juste au-dessous de ladite surface de paroi arrière sous la forme d'ondes transversales (99) qui sont réfléchies une seconde fois par la surface avant de l'objet et sont réfléchies une troisième fois par la surface arrière sous la forme d'ondes transversales qui sont finalement réfléchies en direction dudit point d'incidence (101), et, si l'amplitude des ondes réfléchies dépasse un niveau prédéterminé, ladite image d'amplitude d'écho séparée (102) ainsi produite est affichée en superposition sur ladite image vidéo du défaut.

10. Procédé selon la revendication 1, caractérisé en ce qu'une impulsion envoyée dans l'objet à partir d'une sonde à ultrasons d'angle à ondes de rampage en tant qu'ondes transversales (96) est tout d'abord réfléchie sous la forme d'ondes transversales (105) en direction de la surface avant, puis sont réfléchies en tant qu'ondes transversales (106) en direction de la surface arrière, au niveau de laquelle un défaut (107) situé sur ou juste au-dessous de ladite surface réfléchit l'impulsion sous la forme d'ondes longitudinales (108), qui sont finalement reçues au niveau du point d'incidence (109) de ladite sonde à ultrasons, et, si l'amplitude des ondes réfléchies dépasse un niveau prédéterminé, ladite image d'amplitude d'écho séparée (110) ainsi produite est affichée en superposition sur ladite image vidéo du défaut.

11. Procédé selon la revendication 1, caractérisé en ce qu'une impulsion envoyée dans l'objet à partir d'une sonde à ultrasons d'angle à ondes de rampage sous la forme d'ondes longitudinales (114) est réfléchie par un défaut (115) sur ou juste au-dessous d'une surface arrière sous la forme d'une onde longitudinale (114) renvoyée directement en retour audit point d'incidence (116) et, si l'amplitude de l'onde réfléchie dépasse un niveau prédéterminé, ladite image d'amplitude d'écho séparée (117) ainsi produite est affichée en superposition sur ladite image vidéo du défaut.

12. Procédé selon la revendication 3, caractérisé en ce qu'une impulsion envoyée par une sonde à ultrasons d'angle à ondes de rampage sous la forme d'ondes de rampage (121) le long de la surface avant de l'objet est convertie, au niveau du bord d'une soudure (122) formée par aboutement, en des ondes transversales (123) qui sont réfléchies par un défaut (124) situé sur ou juste au-dessous d'une surface arrière, sous la forme d'ondes longitudinales qui sont finalement reçues au niveau dudit point d'incidence (125) et, si l'amplitude des ondes réfléchies dépasse un niveau prédéterminé, ladite image d'amplitude d'écho séparée (126) ainsi produite est affichée en superposition par ladite image du défaut.

13. Procédé selon la revendication 1, caractérisé en ce qu'une impulsion ultrasonore transmise dans l'objet par une sonde à ultrasons est tout d'abord réfléchie par une première hétérogénéité interne (131), puis est réfléchie une seconde fois par une seconde hétérogénéité interne (133), et est finalement reçue au niveau du point d'incidence (135) de ladite sonde à ultrasons d'angle.
